# EUROPEAN PATENT APPLICATION

(11) **EP 3 795 466 A1**
(43) Date of publication of application: **24.03.2021**
(21) Application number: 20196759.3
(22) Date of filing: 17.09.2020
(51) Int. Cl.: B64C 1/06

(54) **AIRCRAFT INTERIOR WITH MODULAR PANELS**

(30) Priority: 18.09.2019 US 201962902293 P; 31.10.2019 US 201916669975
(71) Applicant: Safran Cabin Inc., Huntington Beach, CA 92647 (US)
(72) Inventor: Scoley, Ian Geoffrey, Huntington Beach, California 92647 (US); Noda, Glen, Huntington Beach, California 92647 (US); Romero, Mike, Huntington Beach, California 92647 (US)
(74) Representative: Stevenson-Hill, Jack Patrick

(57) **Abstract**

An aircraft that includes a body that defines a cabin interior and includes an exterior surface and an interior surface, and at least a first panel member having a front and a back. The back includes a set of panel mounting components thereon and the interior surface of the body includes a set of body mounting components thereon. The set of panel mounting components are removably mounted to the set of body mounting components. The first panel member includes at least one functional component on the front thereof. The functional component is at least one of an armrest, cup holder, charging port, storage pocket, handle, tie down anchor or lighting.

## Description

### CROSS REFERENCE TO RELATED APPLICATIONS

This application claims the benefit of U.S. Provisional Application No. 62/902,293, filed September 18, 2019.

### FIELD OF THE INVENTION

The present invention relates generally to an aircraft interior with panels, and more specifically to a VTOL aircraft interior with panels that include functional components thereon.

### BACKGROUND OF THE INVENTION

With the rise in popularity in ride sharing, small aircraft that can accommodate a small number of passengers for relatively short (e.g., intra-city) trips are contemplated. However, current smaller aircraft, such as helicopters, light civil/VIP aircraft and other with similar sized interiors are too heavy, costly, and low volume to meet the requirements for new vertical take-off and landing (VTOL) and electric VTOL (referred to as an eVTOL) aircraft.

Some of the challenges in developing these aircraft are cost and weight. The cost of manufacture and weight of prior art helicopters and light aircraft are prohibitive in trying to get the ultimate price point down for passengers in the VTOL aircraft. Prior art aircraft typically cost in the millions of dollars each and the cost of VTOL aircraft are targeted to be in the several hundred thousand dollars range each. Therefore, limiting the number of components on an aircraft can reduce both weight and cost.

### SUMMARY OF THE PREFERRED EMBODIMENTS

In accordance with a first aspect of the present invention there is provided an aircraft that includes a body that defines a cabin interior and includes an exterior surface and an interior surface, and at least a first panel member having a front and a back. The back includes a set of panel mounting components thereon and the interior surface of the body includes a set of body mounting components thereon. The set of panel mounting components are removably mounted to the set of body mounting components (to form a panel system). The first panel member includes at least a first functional component on the front thereof, wherein the first functional component is at least one of an armrest, cup holder, charging port, storage pocket, handle, tie down anchor or lighting.

In a preferred embodiment, the interior surface of the body includes at least a first panel indentation defined therein and the second set of mounting components is located in the first panel indentation.

In a preferred embodiment, the aircraft includes front and back rows of seats positioned in the cabin interior. The body includes a door that is positioned adjacent the front row of seats, the set of body mounting components is located on the door, and the first panel is secured to the door. Preferably, the first panel member includes at least one functional component on the front thereof, such as at least one of an armrest, cup holder, charging port, storage pocket, handle, tie down anchor or lighting. Preferably, the body comprises a composite monocoque structure. The aircraft may be a vertical take-off and landing aircraft. In a preferred embodiment, the first panel member is electrically communicated with the body. This can be done by electrically connecting at least one of the panel mounting components with at least one of the body mounting components. The aircraft may further comprise at least a first divider member having a bottom that includes a set of divider mounting components thereon. The body may comprise a floor that includes a second set of body mounting components thereon. The set of divider mounting components may be removably mounted to the second set of body mounting components. The first divider may be positioned such that it divides the cabin interior into a passenger section and a pilot section. In a preferred embodiment, the aircraft with the panel system also includes a divider system.

In accordance with another aspect of the present invention there is provided a method performed on or in an aircraft that includes a body that defines a cabin interior. The body includes an exterior surface and an interior surface and at least first and second panel members that each have a front and a back. The back of the first panel member includes a first set of panel mounting components thereon and the back of the second panel member includes a second set of panel mounting components thereon. The interior surface of the body includes at least first and second sets of body mounting components thereon. The first set of panel mounting components is removably mounted to the first set of body mounting components and the second set of panel mounting components is removably mounted to the second set of body mounting components. The first functional component is at least one of an armrest, cup holder, charging port, storage pocket, handle, tie down anchor or lighting. The method includes disconnecting the first set of panel mounting components from the first set of body mounting components, obtaining a third panel member having a front and a back that includes a third set of panel mounting components thereon, wherein the third panel member includes a second functional component on the front thereof, wherein the second functional component is at least one of an armrest, cup holder, charging port, storage pocket, handle, tie down anchor or lighting, wherein the first functional component is different than the second functional component, and removably mounting the third set of panel mounting components with the first set of body mounting components.

In a preferred embodiment, the method includes disconnecting the second set of panel mounting components from the second set of body mounting components. The second panel member can be replaced with a fourth panel member or the second set of body mounting components can be left unoccupied for the next use of the aircraft. In a preferred embodiment, the first functional component does not require power, and the second functional component requires power (e.g., when upgrading from a basic interior to a VIP interior).

In accordance with another aspect of the present invention there is provided an aircraft that includes a body that defines a cabin interior and includes an exterior surface and an interior surface with a floor, and at least a first divider member having a bottom that includes a set of divider mounting components thereon. The floor includes a set of body mounting components thereon. The set of divider mounting components are removably mounted to the set of body mounting components and the first divider is positioned such that it divides the cabin interior into a passenger section and a pilot section. In a preferred embodiment, the first divider member includes at least one functional component on a front thereof, wherein the functional component is at least one of an entertainment system, cup holder, charging port, storage pocket, handle, tie down anchor or lighting.

In a preferred embodiment, the first divider member includes a storage portion that extends into the pilot section. The storage portion defines a storage area that is accessible through a door of the aircraft.

In accordance with another aspect of the present invention there is provided a method performed on an aircraft that includes a body that defines a cabin interior and an exterior surface and an interior surface that comprises a floor, and at least a first divider member having a bottom. The bottom of the first divider member includes a first set of divider mounting components thereon. The floor includes at least a first set of body mounting components thereon. The first set of divider mounting components is removably mounted to the first set of body mounting components and the first divider is positioned such that it divides the cabin interior into a passenger section and a pilot section. The method includes disconnecting the first set of divider mounting components from the first set of body mounting components, obtaining a second divider member having a bottom that includes a second set of divider mounting components thereon and has a different shape than the first divider member, and removably mounting the second set of divider mounting components with a second set of body mounting components.

In a preferred embodiment, the first set of body mounting components includes a plurality of members, the second set of body mounting components includes a plurality of members, and some of the members of the first set of body mounting components are the same as some of the members of the second set of body mounting components. Preferably, the aircraft includes front and back rows of seats positioned in the cabin interior. A first foot space area is defined between the front row of seats and the first divider member, a second foot space area is defined between the front row of seats and the second divider member, and one of the first foot space area and second foot space area is larger than the other of the first foot space area and second foot space area. It will be appreciated that in an embodiment with both the panel system and the divider system, the body mounting components can be the same for the panels and dividers or they can be different.

The present invention provides solutions addressing new requirements for the interior of eVTOL and VTOL aircraft (referred to together herein as VTOL aircraft) that arise due to deficiencies in the current state of the art. Products within the current state of the art (e.g., helicopters, light civil/VIP aircraft with similar sized interiors) are too heavy, costly, and low volume to meet the requirements for the new types of eVTOL and VTOL aircraft. The present invention relates to a new interior product that, in a preferred embodiment, is designed specifically for use in VTOL aircraft.

The present invention includes the integration and installation of panels with the primary structure and includes a new method of installing interior panels into the primary structure of the VTOL aircraft and can include, but is not limited to, interior panels for the doors, ceiling, personal service unit (PSU) and cargo hold. The enabling design feature is the primary structure functioning as a cosmetic surface visible to passengers, with discrete inset locations for interior panels to be inserted or installed therein. It will be appreciated by those of ordinary skill in the art that the present invention can provide weight reduction and cost efficiency or reduction, when compared to the prior art and can also provide custom branding opportunities on the panels.

In a preferred embodiment, the panels can be installed and removed with a quick release system, such that they are temporary and not permanently installed. Therefore, the panels can be changed as desired.

In a preferred embodiment, the panels can also be modular and include one or more features integrated therewith or thereon. Such features can include armrests, handles, cupholders, storage, power (e.g., USB charging port), lighting, etc. Preferably, the panels also provide acoustic and vibration dampening.

In a preferred embodiment, the body of the aircraft comprises a composite monocoque structure that includes an A-side (the exterior) and a B-side (the interior). Preferably, at least a portion of the interior of the body is visible to passengers in use. The interior includes the system of plug and play panels in key areas. The panels can be different shapes for different areas, but include a common, quick-release fastening system. Preferably the panels help dampen acoustics and vibration, but also help with the styling of the interior of the vehicle. This platform approach allows the panel system manufacturer to use the same system across multiple OEMs. In other words, the present invention includes common fasteners that allow standardization for installation across the multiple OEMs that provide the benefits of platform commonality rather than providing a different attachment methodology for each different VTOL manufacturer or OEM.

In a preferred embodiment, the panels can be enhanced with features that are usable on the interior of the aircraft. The panels themselves provide a baseline product that can be enhanced through selectable options, such as an armrest, that provide functionality. For example, the "New York taxi cab" version can simply include plastic panels inside, while the VIP version of the panel can include a padded leather cover, with a cup holder and a USB charger built into it.

VTOL aircraft can also be used for cargo shipment. In some scenarios, the same aircraft can be used at times for passenger transport and at other times for cargo transport. In this situation, removal and replacement of panels quickly is vital. Therefore, the panels can include provisions or features related to cargo shipment, such as loops, hooks or other tie-downs for the connection of straps. The aircraft may also be used for emergency evacuations and the panels can be functionally equipped as necessary. As a result, the system enables users to remove and replace panels quickly to completely cosmetically change out a passenger vehicle for a cargo vehicle in a minimum amount of time.

The present invention is directed to a system that allows one more aircraft dividers or bulkheads to be configured for different uses and interior arrangements that can provide for storage, additional front row leg room, cabin densification, asymmetrical cabin configurations (or symmetrical cabin configurations), etc.

This platform approach allows the divider member system manufacturer to use the same system across multiple OEMs. In other words, the present invention includes a common attachment system that allow standardization for installation across the multiple OEMs that provide the benefits of platform commonality rather than providing a different attachment methodology for each different VTOL manufacturer or OEM.

The present invention allows a divider member to be easily removed and replaced with a divider member having a different configuration. This allows fast reconfiguration of the aircraft interior. Furthermore, the divider members can include different built in functionality or components depending on the intended use of the aircraft. For example, a simple divider member with no functional components thereon can be used for a cargo aircraft, while a divider member that includes functional components such as storage pockets, cup holders, charging ports, televisions, etc. and other components related to passenger use can be included. For example, the basic divider member may just be a composite panel, and the VIP version may include a leather covered composite panel with embedded lighting and a cup holder.

It will be appreciated that both the removable panel system and the removable divider system can be used alone or together in a single aircraft.

Where appropriate, optional features discussed above in relation to one aspect of the present invention may be applied to another aspect of the invention.

The present invention can be used in conjunction with other concepts related to VTOL aircraft, such as the inventions and concepts taught in U.S. Application No. 16/566,652. The common quick-release system and concept can be similar to the systems described in U.S. Patent Nos. 9,527,591 and 9,562,549.

### BRIEF DESCRIPTION OF THE DRAWINGS

The invention may be more readily understood by referring to the accompanying drawings in which:
FIG. 1 is a plan view of a VTOL aircraft that includes a panel system and a divider system therein in accordance with a preferred embodiment of the present invention;
FIG. 2 is an elevational view of a portion of an aircraft showing panels secured to the interior of the body of the aircraft;
FIG. 3 is an exploded perspective view of a panel member assembly;
FIG. 4 is an elevational cross-section view showing panel members secured to the interior of the aircraft body;
FIG. 5 is an exploded perspective view showing a plurality of different panel members with functional components thereon;
FIG. 6 is a plan view of a VTOL aircraft that includes a divider system therein in accordance with a preferred embodiment of the present invention;
FIG. 7 is a plan view of the VTOL aircraft with a different panel between the pilot section and the passenger section than in FIG. 6;
FIG. 8 is an exploded perspective view of two different panels;
FIG. 9 is another exploded perspective view of two different panels; and
FIG. 10 is a plan view of the VTOL aircraft with different panels between the passenger section and the pilot section and the cargo area than in FIG. 6.

Like numerals refer to like parts throughout the several views of the drawings.

### DETAILED DESCRIPTION OF THE PREFERRED EMBODIMENTS

The following description and drawings are illustrative and are not to be construed as limiting. Numerous specific details are described to provide a thorough understanding of the disclosure. However, in certain instances, well-known or conventional details are not described in order to avoid obscuring the description. References to one or an embodiment in the present disclosure can be, but not necessarily are references to the same embodiment; and, such references mean at least one of the embodiments.

Reference in this specification to "one embodiment" or "an embodiment" means that a particular feature, structure, or characteristic described in connection with the embodiment is included in at least one embodiment of the-disclosure. The appearances of the phrase "in one embodiment" in various places in the specification are not necessarily all referring to the same embodiment, nor are separate or alternative embodiments mutually exclusive of other embodiments. Moreover, various features are described which may be exhibited by some embodiments and not by others. Similarly, various requirements are described which may be requirements for some embodiments but not other embodiments.

The terms used in this specification generally have their ordinary meanings in the art, within the context of the disclosure, and in the specific context where each term is used. Certain terms that are used to describe the disclosure are discussed below, or elsewhere in the specification, to provide additional guidance to the practitioner regarding the description of the disclosure. For convenience, certain terms may be highlighted, for example using italics and/or quotation marks: The use of highlighting has no influence on the scope and meaning of a term; the scope and meaning of a term is the same, in the same context, whether or not it is highlighted.

It will be appreciated that the same thing can be said in more than one way. Consequently, alternative language and synonyms may be used for any one or more of the terms discussed herein. No special significance is to be placed upon whether or not a term is elaborated or discussed herein. Synonyms for certain terms are provided. A recital of one or more synonyms does not exclude the use of other synonyms. The use of examples anywhere in this specification including examples of any terms discussed herein is illustrative only, and is not intended to further limit the scope and meaning of the disclosure or of any exemplified term. Likewise, the disclosure is not limited to various embodiments given in this specification.

Without intent to further limit the scope of the disclosure, examples of instruments, apparatus, methods and their related results according to the embodiments of the present disclosure are given below. Note that titles or subtitles may be used in the examples for convenience of a reader, which in no way should limit the scope of the disclosure. Unless otherwise defined, all technical and scientific terms used herein have the same meaning as commonly understood by one of ordinary skill in the art to which this disclosure pertains. In the case of conflict, the present document, including definitions, will control.

It will be appreciated that terms such as "front," "back," "top," "bottom," "side," "short," "long," "up," "down," "aft," "forward," "inboard," "outboard" and "below" used herein are merely for ease of description and refer to the orientation of the components as shown in the figures. It should be understood that any orientation of the components described herein is within the scope of the present invention.

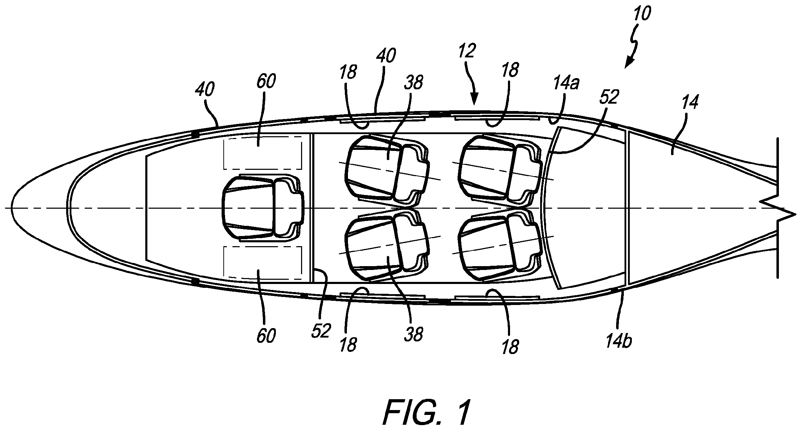

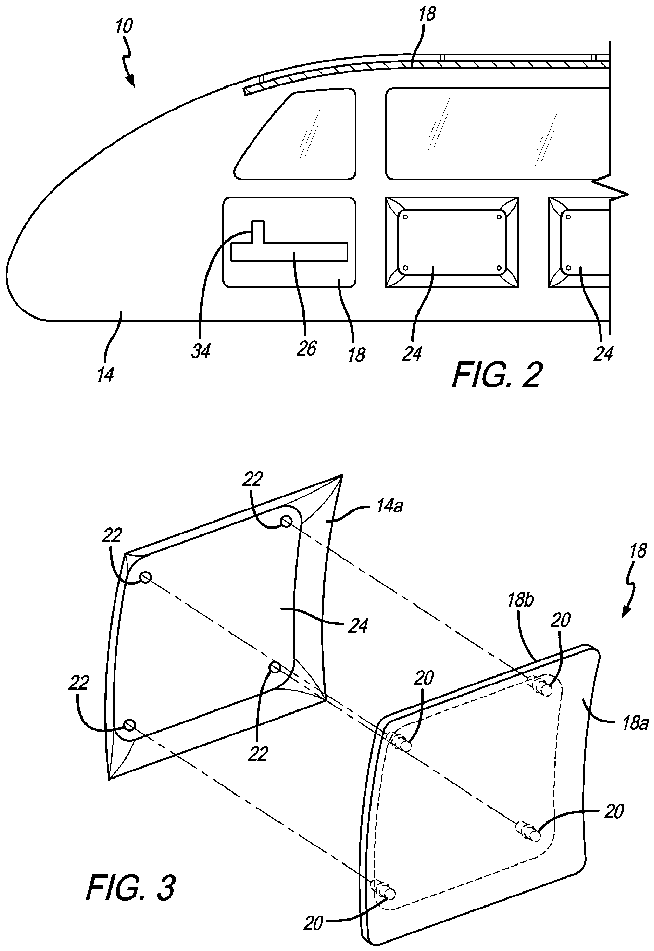

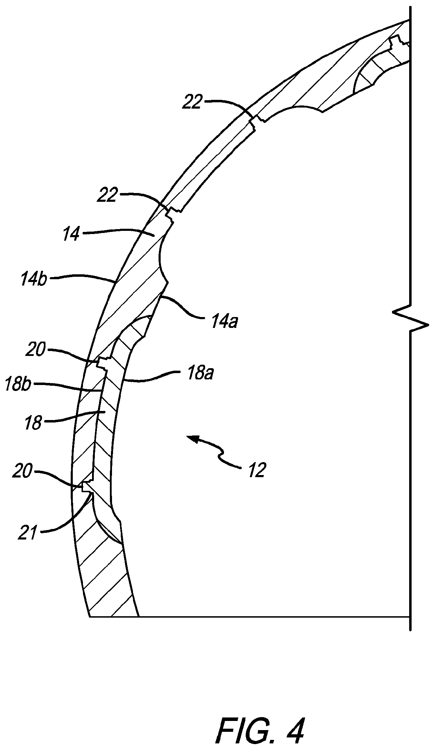

Referring now to the drawings, wherein the showings are for purposes of illustrating the present invention and not for purposes of limiting the same, FIGS. 1-5 show a VTOL aircraft 10 that includes a changeable panel system 12 therein. FIG. 1 shows a plan view of the aircraft 10 including a body 14 that defines a cabin interior 16 and a plurality of panel members 18 secured to an interior surface 14a of the body 14. The panel members 18 each include a front 18a and a back 18b. The back 18b includes a set of first or panel mounting components 20 thereon that is compatible with a set of second or body mounting components 22 on the interior surface 14a of the body 14. The set of panel mounting components 20 are removably mounted to the set of body mounting components 22. Generally, this means that the set of panel mounting components 20 can be easily and quickly removed from or disconnected from the set of body mounting components 22, as discussed above. For example, as shown in FIGS. 3-4, the panel mounting components 20 can be a post, protrusion or other male component that snap fits, press fits or otherwise is received and retained into a female receptacle (the body mounting component) in the wall of body 14. FIGS. 3-4 show a ridge 21 on the male component that is received in an annular groove in the female component. However, this is only exemplary and any complementary sets of first and second mounting components that allow quick release of the panel members from the body is within the scope of the present invention. The male and female components can be reversed such that the male components are on the wall and the female components are on the panel member.

As shown in FIGS. 2-4, in a preferred embodiment, the body 14 includes a plurality of panel indentations 24 that receive at least a portion of the panel members 18. The body mounting components 22 are positioned in the panel indentation 24. This allows the panel members 18 to be inset into the wall or body of the aircraft. The panel members 18 can be shaped so that a portion of the panel member is received in the panel indentation 24 and inset therein and an outer edge and/or surface can be flush with the inner surface 14a of the body 14. This can provide a relatively seamless look for the walls. FIG. 2 shows a first panel member 18 received in the forwardmost panel indentation 24 and two further panel indentations 24 without a panel member received therein. FIG. 2 also shows a long panel member connected to the ceiling of the body 14. It will be appreciated that the panel members 18 can be different sizes and can be connected to any interior surface within the cabin interior. Furthermore, the panel members 18 can be received in panel indentations or can be connected to an area of the body without a panel indentation.

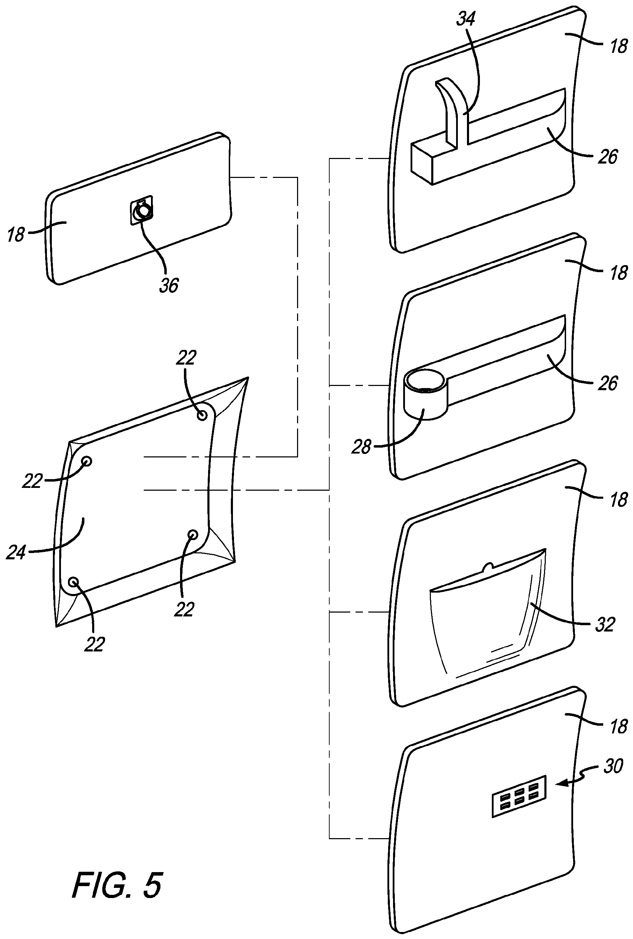

As shown in FIG. 5, in a preferred embodiment, the panel members 18 are modular and can include one or more functional components on a front therof that can be usable by passengers or for other purposes. For example, a panel member can include an armrest 26, cup holder(s) 28, charging port(s) 30, storage pocket(s) 32, handle(s) 34, tie down anchor(s) 36 (loops, hooks or the like for connecting straps or ropes to tie down cargo), lighting, branding, an opening for the door latch mechanism, etc. In an embodiment of the invention, the male and female mounting components can include electrical connection capability (at least one of the set can include electrical connection capability). Therefore, if the functional component needs power (e.g., lighting, charging port), power or electricity can be provided.

As shown in FIG. 1, in a preferred embodiment, the aircraft 10 includes front and back rows of seats 38 positioned in the cabin interior. The seats 38 include a door or doors 40 adjacent thereto for ingress and egress. The doors can include panel members 24 connected thereto.

FIGS. 1 and 6-10 show a VTOL aircraft 10 that includes a changeable divider system 50 therein. This system allows different dividers or bulkheads to be usable with different OEM bodies or allows different dividers to be changed or swapped out for different situations or arrangements within the same body.

FIGS, 6, 7 and 10 show different shaped from dividers 52 positioned between the pilot and the passenger cabin. Similar to the panel system discussed above, the divider system 50 includes a first or divider set of mounting components 54 that are positioned on or associated with the divider 52 and a second or body set of mounting components 56 that are positioned on or associated with the wall, floor or ceiling of the body 14.

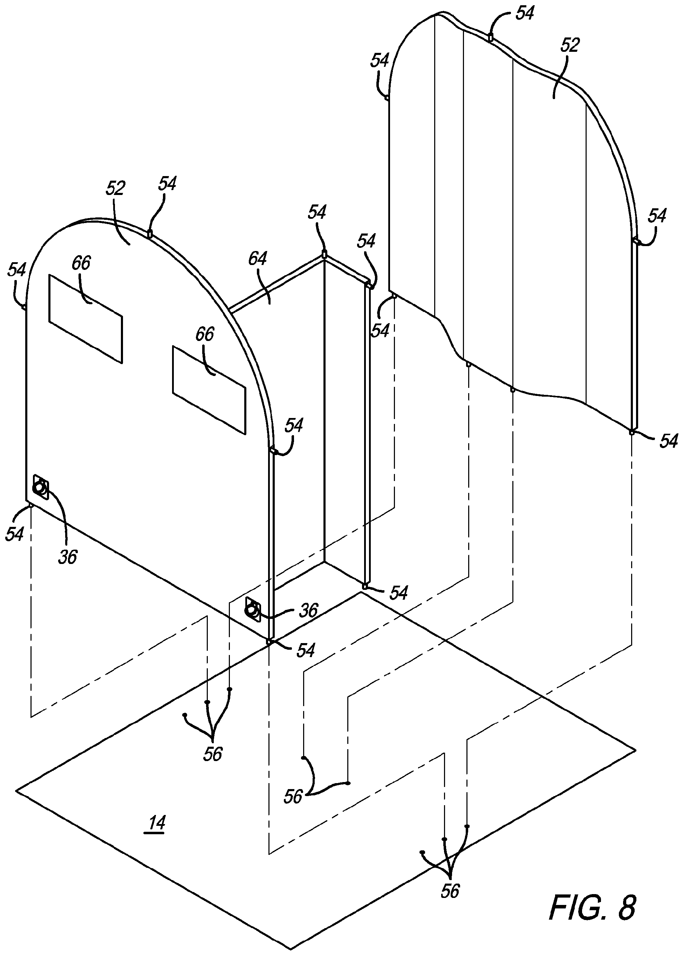

FIG. 8 shows a plurality of male components that represent the set of divider mounting components 54 extending from the divider 52 and a plurality of female components on the floor or body 14 that represent the set of body mounting components 56. All discussion above related to sets of mounting components on the panel system is relevant to the divider system. FIG. 8 shows to different shaped dividers 52 and sets of body mounting components 56 related thereto. Therefore, a first set of divider mounting components 56 can be usable with one divider and a second set of divider mounting components 56 can be usable with a different divider.

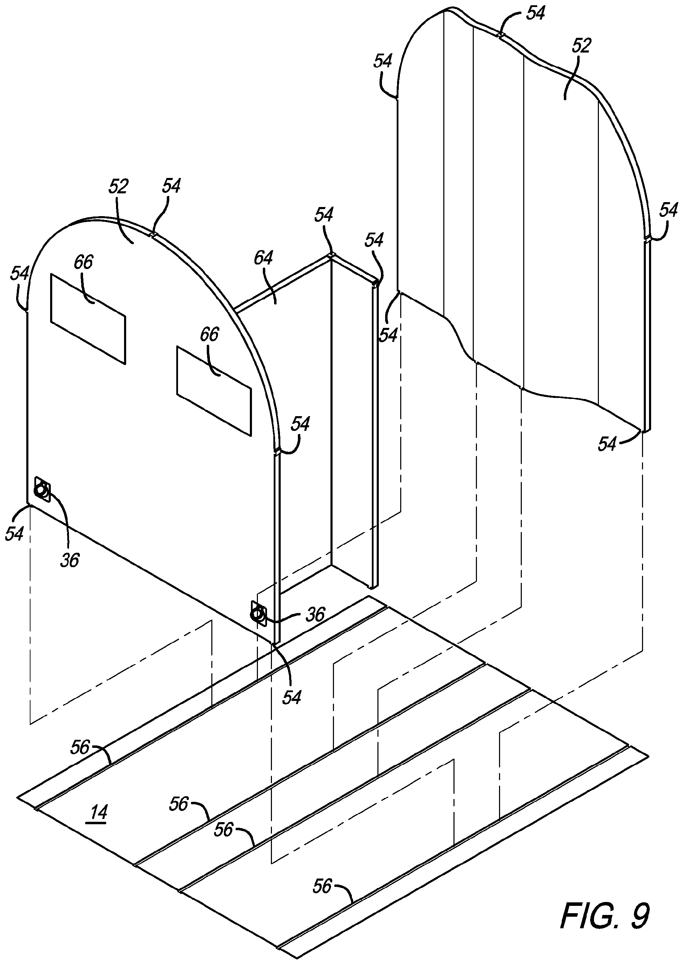

FIG. 9 shows dividers similar to those in FIG. 8, but with tracks or channels on the floor that are the set of body mounting components 56 and feet on the dividers 52 that are the set of divider mounting components 54. These tracks or channels can be the same that are used for mounting the seats or can be separate.

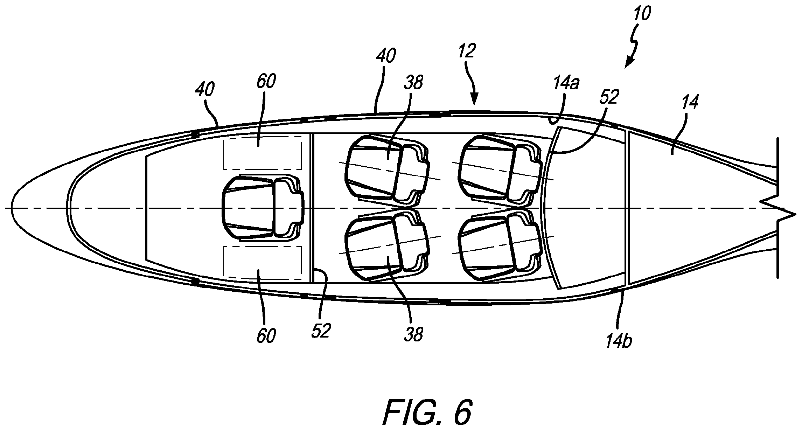

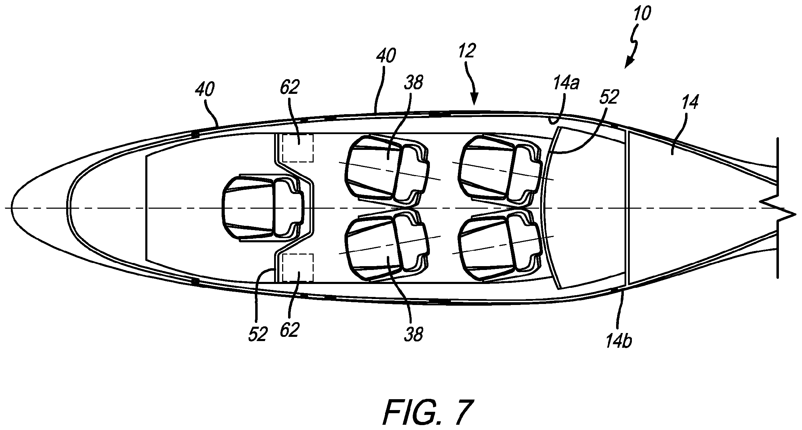

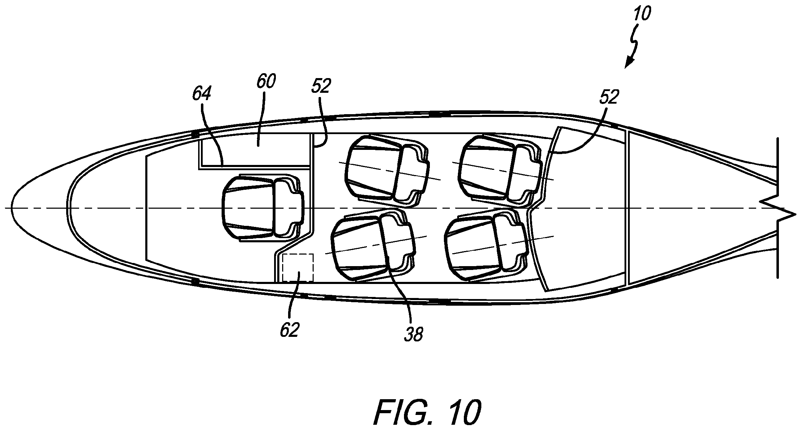

As discussed above, an advantage of the different shaped dividers is the ability to provide space in different areas. For example, as shown in FIG. 6 storage space 60 can be provided on both sides of the pilot seat. As shown in FIG. 7, foot space 62 can be provided for the passengers in the front row. As shown in FIG. 10, both storage space 60 and foot space 62 can be provided by the divider shown therein. The storage space 60 can simply be space within the aircraft interior, as represented by the phantom lines in FIG. 6 or can be defined by structure, as shown in FIG. 10. FIG. 9 shows a storage portion 64 that is a part of and/or connected to the divider 52. The storage portion 64 can include a first set of mounting components 54 thereon that are secured when the divider 52 is installed.

In a preferred embodiment, the dividers 52 include functional components thereon, similar to the panel system discussed above (any of the functional components discussed above can be included thereon). For example, FIG. 8 shows tie down anchors 36 and entertainment systems 66 (e.g., TVs) thereon.

Unless the context clearly requires otherwise, throughout the description and the claims, the words "comprise," "comprising," and the like are to be construed in an inclusive sense, as opposed to an exclusive or exhaustive sense; that is to say, in the sense of "including, but not limited to." As used herein, the terms "connected," "coupled," or any variant thereof, means any connection or coupling, either direct or indirect, between two or more elements; the coupling of connection between the elements can be physical, logical, or a combination thereof. Additionally, the words "herein," "above," "below," and words of similar import, when used in this application, shall refer to this application as a whole and not to any particular portions of this application. Where the context permits, words in the above Detailed Description of the Preferred Embodiments using the singular or plural number may also include the plural or singular number respectively. The word "or" in reference to a list of two or more items, covers all of the following interpretations of the word: any of the items in the list, all of the items in the list, and any combination of the items in the list.

The above-detailed description of embodiments of the disclosure is not intended to be exhaustive or to limit the teachings to the precise form disclosed above. While specific embodiments of and examples for the disclosure are described above for illustrative purposes, various equivalent modifications are possible within the scope of the disclosure, as those skilled in the relevant art will recognize. Further, any specific numbers noted herein are only examples: alternative implementations may employ differing values, measurements or ranges.

The teachings of the disclosure provided herein can be applied to other systems, not necessarily the system described above. The elements and acts of the various embodiments described above can be combined to provide further embodiments. Any measurements described or used herein are merely exemplary and not a limitation on the present invention. Other measurements can be used. Further, any specific materials noted herein are only examples: alternative implementations may employ differing materials.

Aspects of the disclosure can be modified, if necessary, to employ the systems, functions, and concepts of the various references described above to provide yet further embodiments of the disclosure.

These and other changes can be made to the disclosure in light of the above Detailed Description of the Preferred Embodiments. While the above description describes certain embodiments of the disclosure, and describes the best mode contemplated, no matter how detailed the above appears in text, the teachings can be practiced in many ways. Details of the system may vary considerably in its implementation details, while still being encompassed by the subject matter disclosed herein. As noted above, particular terminology used when describing certain features or aspects of the disclosure should not be taken to imply that the terminology is being redefined herein to be restricted to any specific characteristics, features or aspects of the disclosure with which that terminology is associated. In general, the terms used in the following claims should not be construed to limit the disclosures to the specific embodiments disclosed in the specification unless the above Detailed Description of the Preferred Embodiments section explicitly defines such terms. Accordingly, the actual scope of the disclosure encompasses not only the disclosed embodiments, but also all equivalent ways of practicing or implementing the disclosure under the claims.

Accordingly, although exemplary embodiments of the invention have been shown and described, it is to be understood that all the terms used herein are descriptive rather than limiting, and that many changes, modifications, and substitutions may be made by one having ordinary skill in the art without departing from the scope of the invention as defined by the claims.

## Claims

1. An aircraft comprising:
a body that defines a cabin interior, wherein the body includes an exterior surface and an interior surface,
at least a first panel member having a front and a back, wherein the back includes a set of panel mounting components thereon, wherein the interior surface of the body includes a set of body mounting components thereon, wherein the set of panel mounting components are removably mounted to the set of body mounting components, wherein the first panel member includes at least a first functional component on the front thereof, wherein the first functional component is at least one of an armrest, cup holder, charging port, storage pocket, handle, tie down anchor or lighting.

2. The aircraft of claim 1 further comprising front and back rows of seats positioned in the cabin interior, wherein the body comprises a door that is positioned adjacent the front row of seats, wherein the set of body mounting components is located on the door, and wherein the first panel is secured to the door.

3. The aircraft of claim 1 or claim 2 wherein the functional component is an armrest.

4. The aircraft of any preceding claim wherein the body comprises a composite monocoque structure.

5. The aircraft of any preceding claim wherein the aircraft is a vertical take-off and landing aircraft.

6. The aircraft of any preceding claim wherein the first panel member is electrically communicated with the body.

7. The aircraft of any preceding claim further comprising at least a first divider member having a bottom that includes a set of divider mounting components thereon, wherein the body comprises a floor that includes a second set of body mounting components thereon, wherein the set of divider mounting components are removably mounted to the second set of body mounting components, wherein the first divider is positioned such that it divides the cabin interior into a passenger section and a pilot section.

8. A method performed on an aircraft that includes a body that defines a cabin interior, wherein the body includes an exterior surface and an interior surface, and at least first and second panel members that each have a front and a back, wherein the back of the first panel member includes a first set of panel mounting components thereon, wherein the back of the second panel member includes a second set of panel mounting components thereon, wherein the interior surface of the body includes at least first and second sets of body mounting components thereon, wherein the first set of panel mounting components is removably mounted to the first set of body mounting components, wherein the second set of panel mounting components is removably mounted to the second set of body mounting components, and wherein the first panel member includes a first functional component on the front thereof, wherein the first functional component is at least one of an armrest, cup holder, charging port, storage pocket, handle, tie down anchor or lighting, the method comprising the steps of,
disconnecting the first set of panel mounting components from the first set of body mounting components,
obtaining a third panel member having a front and a back, wherein the back of the third panel member includes a third set of panel mounting components thereon, wherein the third panel member includes a second functional component on the front thereof, wherein the second functional component is at least one of an armrest, cup holder, charging port, storage pocket, handle, tie down anchor or lighting, wherein the first functional component is different than the second functional component, and
removably mounting the third set of panel mounting components with the first set of body mounting components.

9. The method of claim 8 wherein the first functional component does not require power, and wherein the second functional component requires power.
